# EUROPEAN PATENT APPLICATION

(11) **EP 4 825 767 A1**
(43) Date of publication of application: **21.10.2026**
(21) Application number: 26171824.1
(22) Date of filing: 13.04.2026
(51) Int. Cl.: B65G 47/90, B65G 1/04

(54) **LOADING AND SINGULARIZING SYSTEM FOR THE CONTROLLED SEPARATION OF ELONGATED PIECES**

(30) Priority: 17.04.2025 IT 202500008652
(71) Applicant: Adige S.p.A., 38056 Levico Terme (TN) (IT)
(72) Inventor: SEGALLA, Enrico, 38057 Pergine Valsugana (Trento) (IT); DALFOLLO, Giovanni, 38056 Levico Terme (Trento) (IT); CASAGRANDA, Marco, 38043 Bedollo (Trento) (IT); TRENTIN, Edoardo, 38050 Scurelle (Trento) (IT)
(74) Representative: Vanzini, Christian

(57) **Abstract**

Loading and singularizing system for the controlled separation of elongated pieces, comprising a containment cradle (13) configured to receive a plurality of elongated pieces (P), a conveying plane (15), movement devices (12, 14, 16) operable to transfer the elongated pieces (P) from the containment cradle (13) to the conveying plane (15), a camera (20) aimed at the containment cradle (13) and the conveying plane (15), an artificial intelligence electronic processing system (30) arranged to receive a sequence of images as input and to assign each elongated piece with a respective position of the elongated piece with respect to a given reference system, and a control system (40) coupled to the electronic processing system (30) and arranged to control the movement devices (12, 14, 16) depending on the positioning of the elongated pieces in the sequence of images.

## Description

The present invention relates to the field of machines for processing elongated pieces, such as tubes, profiles or bars. In particular, the invention relates to a loading and singularizing system for the controlled separation of elongated pieces.

Singularizing systems for the controlled separation of elongated pieces are known, which comprise an oscillating structure for transferring the elongated pieces from a warehouse to a processing machine.

It is the object of the present invention to improve the prior art. In particular, there is a need to develop a loading and singularizing system capable of handling a wide variety of elongated pieces, in terms of size (larger or smaller cross-sections), cross-section shape (for example, circular or rectangular cross-section, solid or hollow cross-section, open or closed cross-section) and materials (for example, steel or aluminum).

This and other objects are fully achieved according to the present invention by virtue of a loading and singularizing system having the features specified in appended independent claim 1.

Advantageous embodiments of the invention are the object of the dependent claims, the content of which is to be understood as an integral part of the following description.

In summary, the invention is based on the idea of manufacturing a loading and singularizing system for the controlled separation of elongated pieces, the system comprising
a containment cradle configured to receive a plurality of elongated pieces,
a conveying plane,
movement means operable to transfer the elongated pieces from the containment cradle to the conveying plane,
image acquisition means aimed at the containment cradle and the conveying plane, said image acquisition means being adapted to acquire a sequence of images of the elongated pieces in the containment cradle and on the conveying plane, respective front ends of the elongated pieces being visible in the sequence of images,
artificial intelligence electronic processing means configured to receive said sequence of images as input and to assign each elongated piece with a respective position of the elongated piece with respect to a given reference system, and
control means coupled to the electronic processing means and arranged to control said movement means depending on the positioning of said elongated pieces in said sequence of images,
in which said electronic processing means are capable of tracking and monitoring the movement of the elongated pieces along the entire conveying plane.

By virtue of such a system, it is possible to make a system capable of adapting the movement cycles of the mechanical components of the system aimed at achieving the controlled separation of the pieces based on the specific features of the pieces to be processed and the loading conditions thereof in the containment cradle.

According to a preferred embodiment, the loading and singularizing system further comprises
a support structure,
an oscillating structure supported by the support structure and capable of rotating with respect thereto, said oscillating structure carrying the containment cradle,
a lifter carried by the oscillating structure, the lifter being configured to lift the elongated pieces contained in the containment cradle,
in which the conveying plane is carried by the oscillating structure and has an end adjacent to an upper edge of the containment cradle, the conveying plane comprising at least one driving member arranged in a movable manner along the conveying plane in a conveying direction, so that the elongated pieces that are lifted by the lifter beyond the upper edge of the containment cradle and reach the conveying plane can be conveyed in a controlled manner along the conveying plane,
in which the oscillating structure is rotatable between a vertical position, in which the conveying plane is arranged horizontally, and a forwardly inclined position in which the conveying plane is inclined and arranged below the upper edge of the containment cradle,
in which the control means are arranged to control the movement of at least one of said oscillating structure, lifter, and driving member, depending on the positioning of said elongated pieces in said sequence of images.

According to such a specific embodiment, the system may, for example, decide the positioning distance of the driving tooth from the upper edge of the containment cradle in order to also accept more than one piece on the conveying plane, but may also decide to use the driving tooth as a thrust member to push the elongated pieces present on the conveying plane back into the containment cradle, except, possibly, one intended to be transferred to the processing machine. Or, in the case of compact and relatively flexible types of elongated pieces that may become entangled, the system may decide to oscillate the oscillating structure forward and backward so as to remix the pieces contained in the containment cradle, so as to obtain an arrangement that facilitates the transfer thereof onto the conveying plane.

Further features and advantages of the present invention will become apparent from the following detailed description, given purely by way of non-limiting example with reference to the accompanying drawings, in which:
Figures 1 and 2 are perspective views, from different points of view, of a loading and singularizing system according to the present invention;
Figures 3 to 5 are side elevation views showing the loading and singularizing system of Figure 1 with an oscillating structure respectively in a vertical position, a forwardly inclined position, and a rearwardly inclined position;
Figures 6 to 11 are enlarged-scale views of a detail of the loading and singularizing system of Figure 1, showing a driving member in different operating positions;
Figures 12 to 14 are photographs of a display of the loading and singularizing system showing successive movement steps of wide tubular pieces with a circular section; and
Figures 15 to 17 are photographs of a display of the singularizing system showing successive handling steps of compact tubular pieces with a circular section.

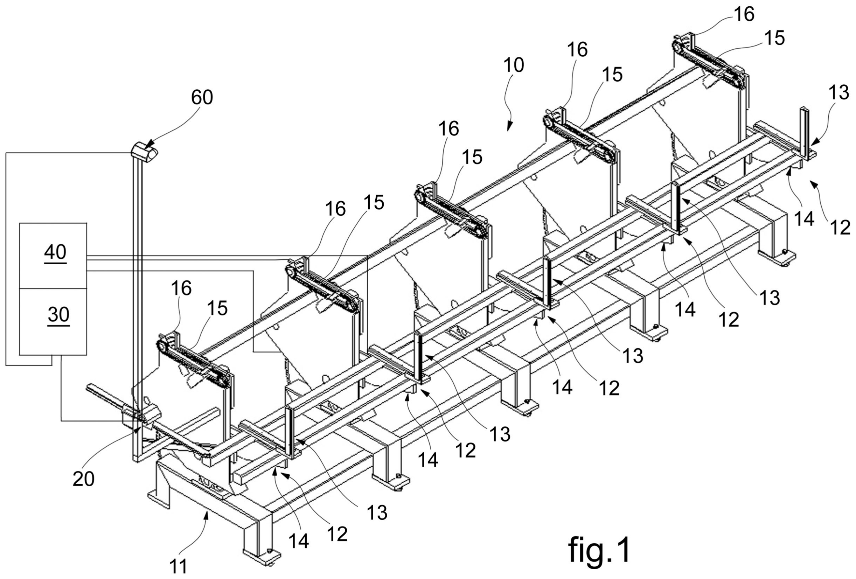

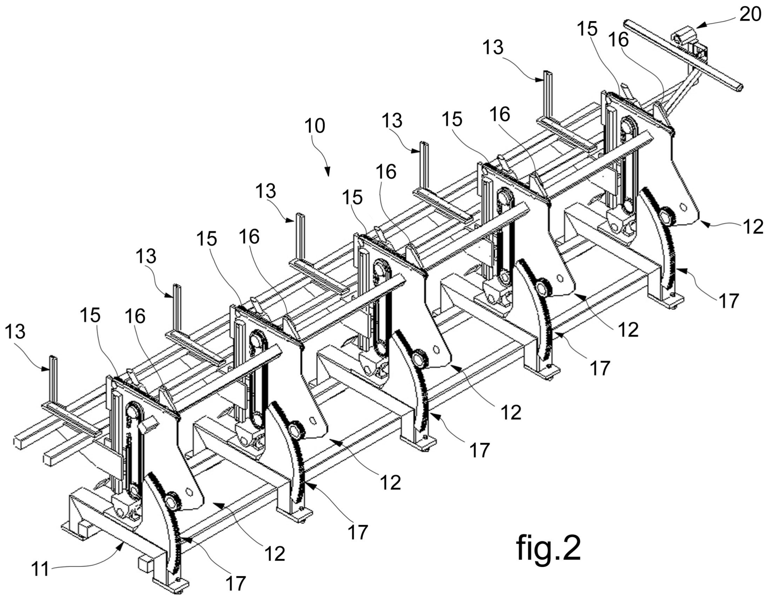

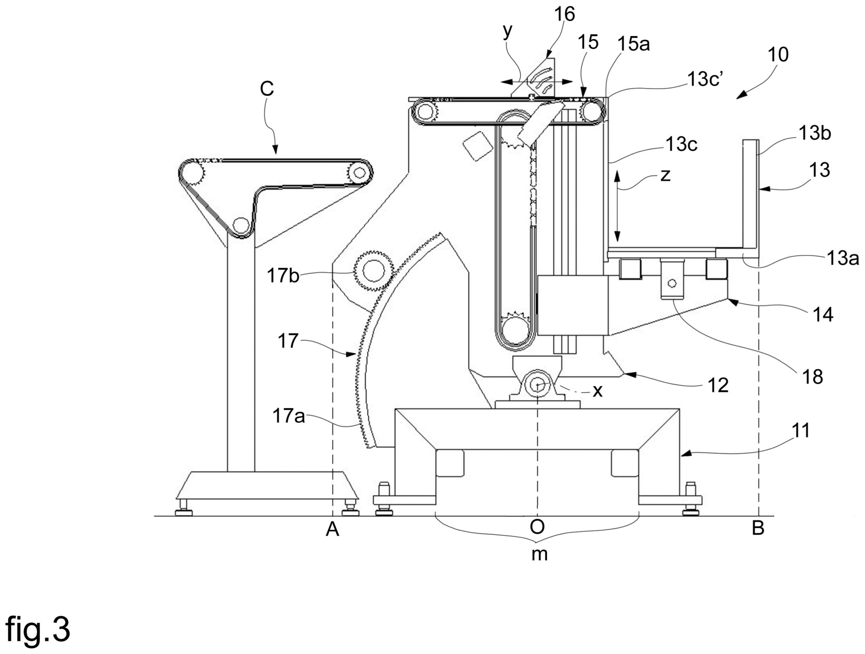

Figures 1 to 5 show a perspective view (Figures 1 and 2) and a side view (Figures 3 to 5) of a loading and singularizing system 10. Figures 3 to 5 show the loading and singularizing system 10 in combination with a conveyor C (which is described below) for transferring the elongated pieces to a processing machine (not shown). A picking system (not shown) for transferring the elongated pieces from a warehouse (not shown) to the loading and singularizing system 10 is conventionally provided on the opposite side with respect to the conveyor. In the following description, spatial terms such as "front" and "rear" refer to the direction in which the elongated pieces are transferred from the warehouse to the processing machine, i.e., from right to left according to the depiction in Figures 3-5. In other words, the front side of the loading and singularizing system 10 is the one facing the conveyor/processing machine, from which the elongated pieces exit, while the rear side is the opposite side, facing the warehouse, and through which the elongated pieces enter. The elongated pieces may be, for example, tubular pieces, bars, open- or closed-section profiles.

The loading and singularizing system 10 comprises a stationary support structure 11 and an oscillating structure 12 (otherwise known as a tilting structure) supported by the support structure 11 and capable of rotating with respect thereto. The rotation axis, about which the oscillating structure 12 is rotatable with respect to the support structure 11, is indicated by x.

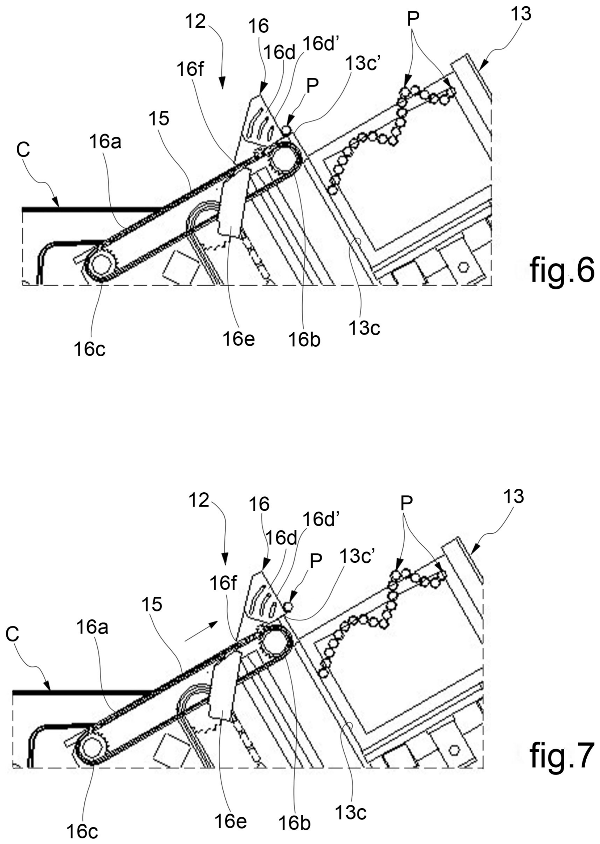

The loading and singularizing system 10 further comprises a containment cradle 13 and a lifter 14 carried by the oscillating structure 12. The containment cradle 13 is configured to receive a plurality of elongated pieces P, shown in Figures 6 to 11. Lifter 14 is configured to lift the elongated pieces P contained in the containment cradle 13. In the example illustrated, the containment cradle 13 comprises a bottom 13a, and a side 13b that delimits the containment cradle 13 at the rear, and a wall 13c of the oscillating structure 12 that delimits the containment cradle 13 at the front. In the example illustrated, bottom 13a and side 13b of the containment cradle 13 are formed by a reticular structure (see Figures 1 and 2). Further, lifter 14 is coupled to the containment cradle 13 so as to be capable of translating the movable part of the containment cradle 13 (i.e., bottom 13a and the rear side 13b) along wall 13c of the oscillating structure 12, in the direction indicated by arrow z in Figures 3-5. According to an alternative embodiment (not shown), the containment cradle 13 could be fixed with respect to the oscillating structure 12. In this case, lifter 14 may comprise a movable bottom platform arranged in the containment cradle 13.

The loading and singularizing system 10 further comprises a conveying plane 15 carried by the oscillating structure 12 and having an end adjacent to an upper edge 13c' of the containment cradle 13 (i.e., the upper edge of wall 13c of the oscillating structure 12). In the example illustrated, the conveying plane is orthogonal to the front side of the containment cradle 13, i.e., it is orthogonal to wall 13c of the oscillating structure 12.

The conveying plane 15 may comprise at least one driving member 16, for example, a driving tooth, arranged in a movable manner along the conveying plane 15 in a conveying direction y, so that the elongated pieces that are lifted by lifter 14 beyond the upper edge 13c' of the containment cradle 13 and reach the conveying plane 15 can be conveyed in a controlled manner along the conveying plane 15.

In the example illustrated, the oscillating structure 12 is formed by a plurality of modules arranged side-by-side along the length of the loading and singularizing system 10. This construction allows the loading and singularizing system 10 to be configured based on the length of the elongated pieces to be processed by the system.

The loading and singularizing system 10 further comprises an actuating mechanism 17 for rotatably actuating the oscillating structure 12. The actuating mechanism 17 comprises a continuous-motion actuator or a step-by-step actuator. In the example illustrated, the actuating mechanism is a rack-and-pinion mechanism 17 and comprises an arcuate rack 17a that is integral with one of said support structure 11 and oscillating structure 12 (in the specific example illustrated, the arcuate rack 17a is integral with the support structure 11), and a motorized ratchet wheel 17b that engages the arcuate rack 17a and is supported by the other of said support structure 11 and oscillating structure 12 (in the specific example illustrated, the motorized ratchet wheel 17b is supported by the oscillating structure 12). The arcuate rack 17a extends concentrically to the rotation axis x of the oscillating structure 12.

As can be seen in Figure 3, the projection of the rotation axis x on a horizontal plane is preferably arranged in a central area m between projection A on the horizontal plane of a frontmost point of the oscillating structure 12 in the vertical position, and projection B on the horizontal plane of a rearmost point of the oscillating structure 12 in the vertical position thereof, in which the conveying plane 15 is arranged horizontally. "Central area" for the structure in the vertical position as shown in Figure 3 means an area centered on midpoint O between the projections A and B and having a smaller extension than the distance between the projections A and B on the horizontal plane of the pivot axis x, for example, equal to half the distance between the projections A and B.

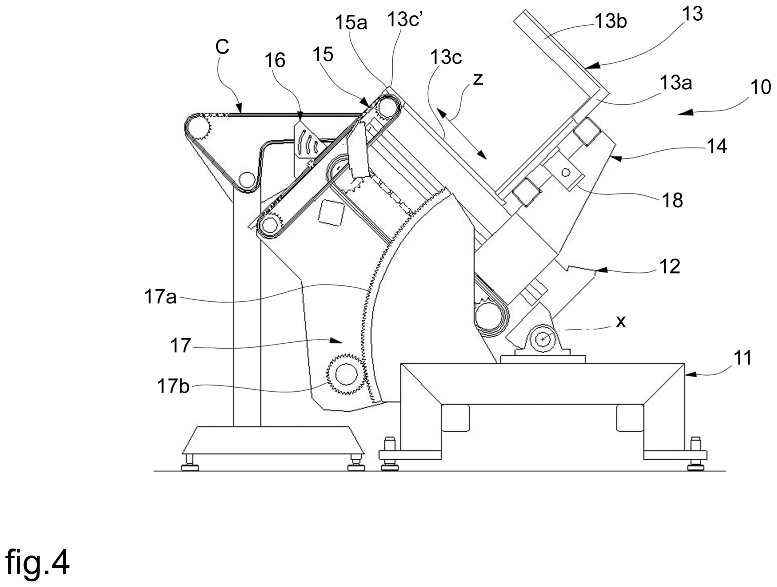

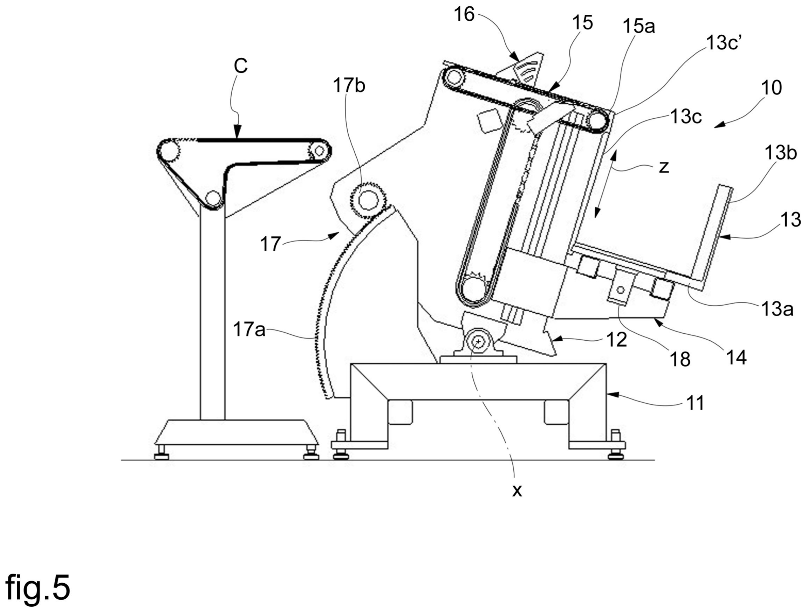

The oscillating structure 12 is rotatable, on one side, between the vertical position of Figure 3 and a forwardly inclined position shown in Figure 4, in which the conveying plane 15 is inclined and arranged below the upper edge 13c' of the containment cradle 13, and on the other side, between the vertical position and a rearwardly inclined position shown in Figure 5, in which the conveying plane 15 is inclined and arranged above the upper edge 13c' of the containment cradle 13. In other words, the oscillating structure 12 is capable of following a circumference arc trajectory centered on the rotation axis x, and in which the point of the arc trajectory corresponding to the vertical position is arranged at a higher level than the end points reachable in the forwardly inclined position and in the rearwardly inclined position. Such end points may, for example, correspond to a forward inclination angle of +60° and beyond, and a rearward inclination angle of -20° and beyond, respectively, measured with respect to the vertical.

The actuating mechanism 17 is configured so that the oscillating structure 12 is positionable in a plurality of forwardly inclined positions and a plurality of rearwardly inclined positions. In other words, the oscillating structure 12 does not only move from the vertical position thereof to a single forwardly inclined position and vice versa, or from the vertical position thereof to a single rearwardly inclined position and vice versa, rather is capable of moving between multiple intermediate positions comprised between two end positions as a function of the type of elongated element to be processed and the specific process conditions, as clarified below.

Figures 3 to 5 show the loading and singularizing system 10 in combination with conveyor C for transferring the elongated pieces to a processing machine (not shown). In the example illustrated, conveyor C is formed by a plurality of conveying modules arranged next to one another along the length of the singularizing system 10. In Figure 4, the oscillating structure 12 is in the transfer position. This means that the oscillating structure 12 and the containment cradle 13 are rotated by an angle with respect to the horizontal, so that lifter 14 can push a certain number of elongated pieces beyond the upper edge 13c' of the containment cradle 13 onto the forwardly inclined conveying plane 15. The number of pieces to be separated may be accurately adjusted by acting on the angle of the rotational movement of the oscillating structure 12, on the translation movement of lifter 14 with respect to the oscillating structure 12, and on the translation movement of the driving member 16 with respect to the conveying plane 15. In the transfer position of Figure 4, the forwardly inclined conveying plane 15 intersects the horizontal transport plane defined by conveyor C and made with endless transport means, for example a belt or a chain. Once the piece(s) that is to be sent to the processing machine is/are on the forwardly inclined conveying plane 15, resting against the driving member 16, the movement of the driving member 16 towards conveyor C allows the piece(s) to fall along the inclined conveying plane 15 at a speed controlled by the movement of the driving member 16, until reaching the horizontal transport plane of conveyor C. The arrangement of the inclined conveying plane 15 with respect to the horizontal transport plane of conveyor C is such that, beyond a certain point of the translation movement thereof along the conveying plane 15, the driving member 16 is completely below the horizontal transport plane of conveyor C so as to allow the passage of the piece(s) transported on the horizontal transport plane of conveyor C.

With reference to Figures 6 to 11, the driving member 16 is fastened to endless transmission means 16a, for example, endless chain transmission means, which are in turn guided between a drive gear wheel 16b and a driven gear wheel 16c. The drive gear wheel is in turn actuated by a motor (not shown). The upper branch of the endless transmission means 16a is arranged parallel to the conveying plane and 15 and slightly below it. The endless transmission means 16a allow the driving member 16 to translate along the conveying plane 15. If the translation direction of the endless transmission means 16a and the driving member 16 is oriented away from the upper edge 13c' of the containment cradle 13, such a movement allows the accompaniment of the pieces P arranged on the conveying plane 15 in the manner described above. It is however possible to reverse the translation direction of the endless transmission means 16a and the driving member 16 so that it is oriented towards the upper edge 13c' of the containment cradle 13, as shown in Figure 7, in particular in the case where it is necessary to reject the pieces P arranged on the conveying plane 15 into the containment cradle 13. Advantageously, the driving member 16 is capable of reaching an end position in which the driving member 16 protrudes beyond the upper edge 13c' of the containment cradle 13. Such an arrangement allows the transfer of the pieces P into the containment cradle 13 to be facilitated. Further, in the case where friction between the pieces hinders the sliding of a single piece from the stack contained in the containment cradle 13, and lifted so as to have a first layer of pieces beyond the level of the upper edge 13c' of the containment cradle 13, the application of a reciprocating motion to the driving member 16 protruding towards the containment cradle 13 may be useful to move such pieces.

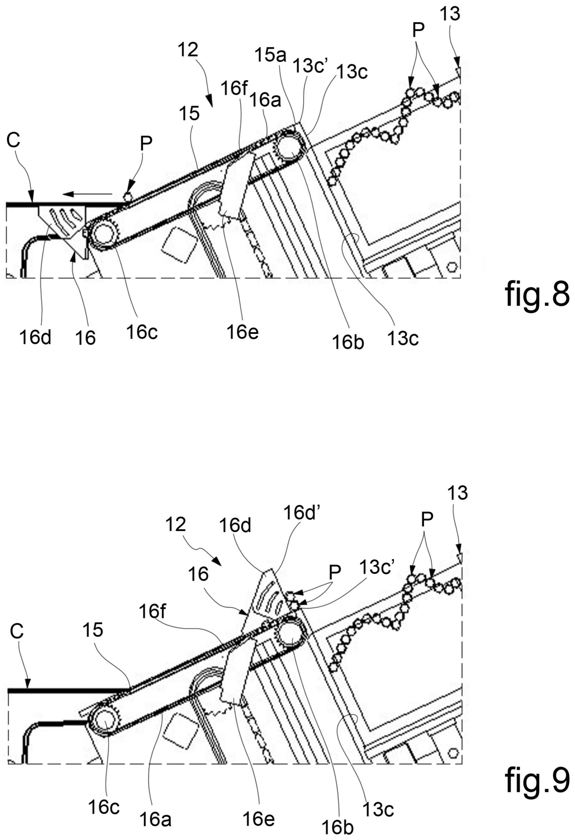

Figure 8 shows the driving member 16 being tipped forward when the part of the endless transmission means 16a to which it is constrained passes over the gear wheel 16c closest to the horizontal transport plane of conveyor C. Such tilting lowers the driving member 16 below the horizontal transport plane of conveyor C, avoiding the driving member 16 from interfering with the pieces P in transit on such a transport plane.

With reference to Figures 9-10, the driving member 16 is provided with an adjustable support element 16d, which is mounted on the driving tooth 16 so as to provide the elongated pieces P with a support surface 16d' which inclination with respect to the conveying plane 15 is adjustable. Such an inclination in the illustrated embodiment is manually adjustable, but the adjustment could be motorized in other embodiments. Such a contrivance serves to avoid the situation, shown in Figure 9, in which multiple pieces are on top of one another, resting against the driving member 16. Such a situation is in fact undesirable because it hinders a controlled separation of the elongated pieces P. By adjusting the inclination of the support element 16d so as to compensate for the inclination of the conveying plane 15, it is in fact possible for the support surface 16d' to be vertical or slightly overhanging, preventing multiple elongated pieces P from settling on top of one another.

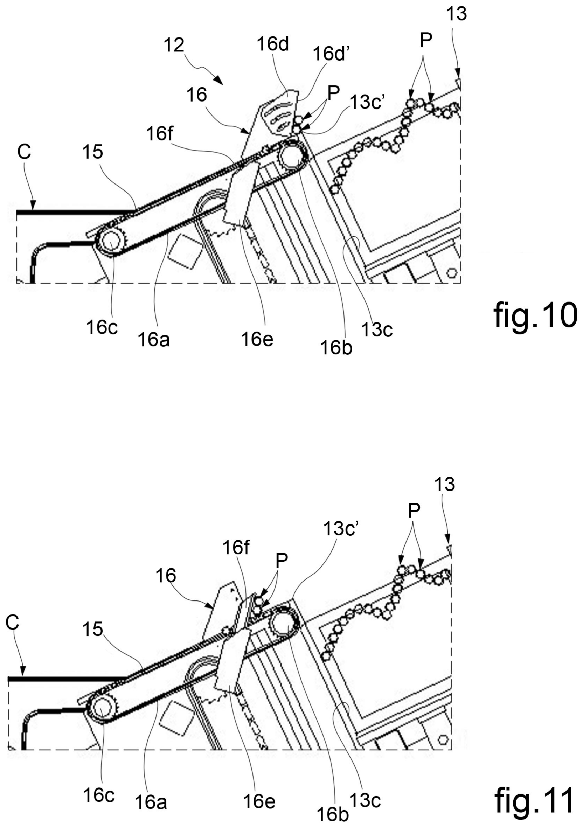

With reference to the Figure 11, another embodiment provides implementing an actuator 16e, also carried by the oscillating structure 12, provided with a stop element 16f that is inclined with respect to the conveying plane 15 and is capable of extending or retracting with respect to actuator 16e. The stop element 16f is arranged so that in the extended position thereof, it protrudes beyond the conveying plane 15. Actuator 16e is operable to create an inclined barrier on the conveying plane 15. Thereby, in the case where multiple elongated pieces P are located on top of one another, resting against the driving member 16, if the driving member 16 is moved until it intersects the position of the stop element 16f, the inclined barrier causes the pieces positioned above to fall, which then become positioned side-by-side, and no longer on top of one another, against the driving member 16.

The loading and singularizing system 10 may further comprise a plurality of vibrating members 18 mounted on the containment cradle 13 and/or on lifter 14, and operable to apply a controlled vibration to the elongated pieces contained in the containment cradle 13. The use of such vibrating members may be advantageous to facilitate the movement/rearrangement of the pieces in the containment cradle, in particular when the pieces are made of materials with a relatively high friction, which could slide with difficulty over one another or on the materials of the containment cradle 13. For example, in the case where the pieces contained in the containment cradle 13 are aluminum tubes with a square or rectangular section, the friction between the tubes could hinder the sliding of a single tube from the stack contained in the containment cradle 13, and lifted so as to have a first layer of tubes beyond the level of the upper edge 13c' of the containment cradle 13. If a controlled vibration is applied to the containment cradle 13 and/or to lifter 14, such a vibration is transmitted to the tubes, causing the detachment of the first piece in the stack, which rests against the driving member 16. The inclination of the oscillating structure 12 must be adjusted so as to be large enough so that the action of the vibrating members is effective, but not too large so as to avoid the detachment of multiple tubes together. In greater detail, a very high inclination would be required in order to overcome the force of static friction by exploiting gravitational force, resulting in many pieces falling as a whole: the application of controlled vibrations allows static friction to be overcome at a smaller angle, thus making tube loading smoother.

The loading and singularizing system 10 comprises a control system based on artificial intelligence. At the input level, such a control system comprises image acquisition means 20, for example a camera, aimed at the containment cradle 13 and the conveying plane 15.

In the example illustrated, the image acquisition means 20 are integral with the oscillating structure 12. The image acquisition means 20 are adapted to acquire time-varying image sequences (for example, video) of the elongated pieces P in the containment cradle 13 and on the conveying plane 15 during the transfer thereof from the containment cradle 13 to the conveying plane 15. The image acquisition means 20 are positioned so that the front ends of the elongated pieces P are visible in the image sequences. For example, such image acquisition means 20 are positioned at one end of the oscillating structure 12.

With reference to Figure 1, the control system of the loading and singularizing system 10 further comprises artificial intelligence electronic processing means 30, comprising a graphics processing unit and arranged to receive the sequences of images as input and to assign sequential labels to the elongated pieces P depending on their position and probability of reaching the conveying plane 15. Such a probability is calculated and updated in real time based on parameters such as, for example, type and material of the elongated pieces, position of the elongated pieces in the containment cradle and on the conveying plane, position of the elongated pieces with respect to one another, position of the moving parts of the loading and singularizing system 10. More generally, the electronic processing means 30 are arranged to assign each elongated piece with a respective position of the elongated piece with respect to a given reference system. By way of non-limiting example, such a reference system could be a Cartesian axes system originating at the intersection point 13c' between the front wall 13c of the containment cradle 13 and the conveying plane 15, a first axis parallel to the conveying direction y of the conveying plane 15, a second axis parallel to the front wall 13c and orthogonal to the first axis, and a third axis orthogonal to the first two. The electronic processing means 30 coupled with the image acquisition means 20 process the moving images in real time and allow performing a frontal analysis of the entire bundle of pieces, counting the pieces, measuring and verifying the section of such pieces, as well as measuring the position of the heads of the pieces in the sequence of images. This allows verifying the number of pieces on the driving member 16, as well as verifying the correct resting of the piece on the driving member 16 during the accompaniment/conveying. In particular, the movement of the elongated pieces P is tracked and monitored along the entire conveying plane 15. This is particularly useful, for example, in the case of compact and relatively flexible elongated pieces, for which the piece may not rigidly follow the driving member 16 during the movement of the latter.

The electronic processing means 30 are coupled with control means 40 (for example, a PLC) arranged to control the movement of the oscillating structure 12, lifter 14 and/or the driving member 16 depending on the positioning of the elongated pieces (or, in one embodiment, depending on the positioning of the sequential labels) with respect to the conveying plane 15 and the driving member 16 in the sequences of images being acquired. The control means 40 may further be arranged to control the vibrating members 18, where present.

The processing and control units operate according to an artificial intelligence algorithm. The first function of such an algorithm is to collect the data originating from various tests, performed with pieces having a different diameter, shape and material, in different stacking conditions in the containment cradle 13, during a training step.

Subsequently, the acquired data are processed and analyzed by the artificial intelligence. In this data processing step, the software acquires the information and data necessary to complete the subsequent step, the decision step.

In the decision step, the software compares and relates the input data with those present in a database stored in the system and processes an action.

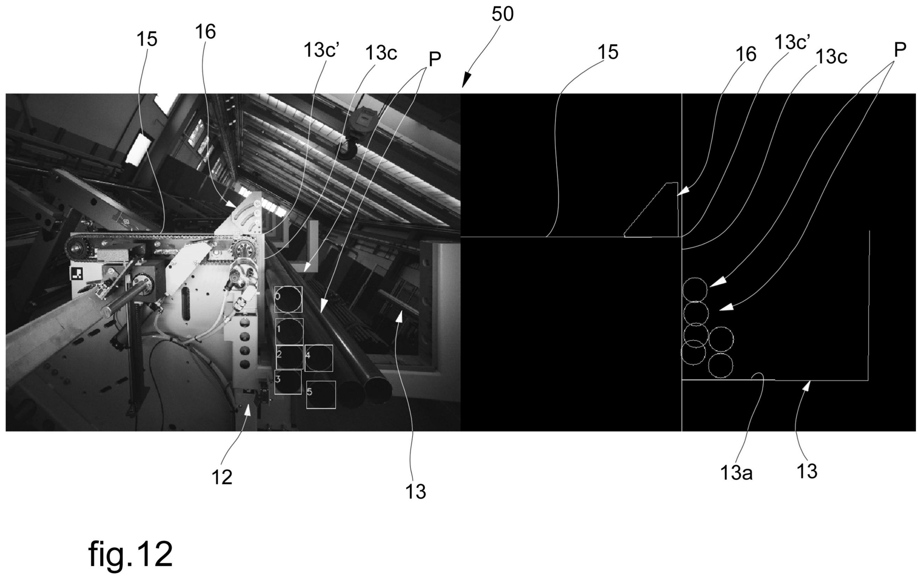

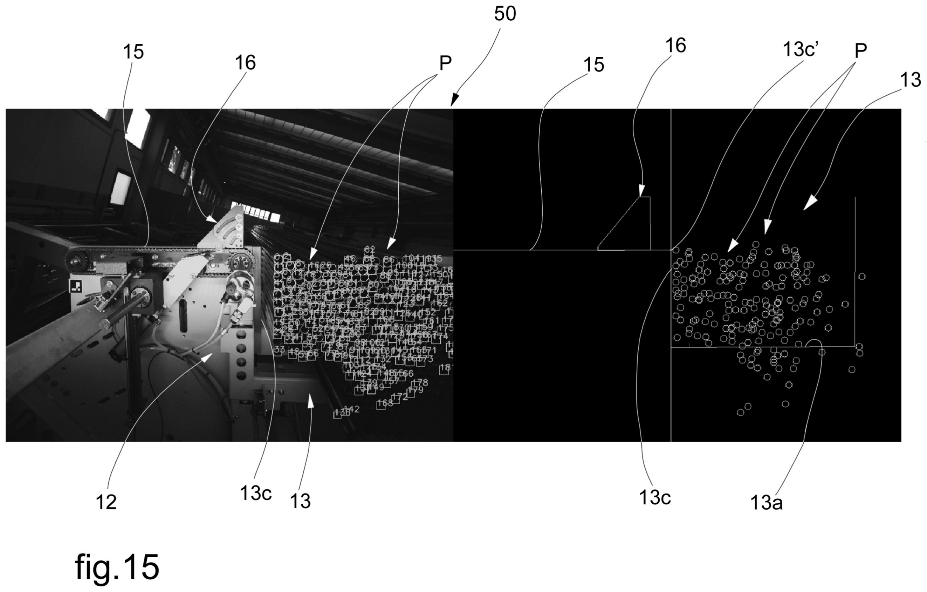

Figures 12 to 17 are photographs of a display 50 showing the real-time video of an example of a singularizing process applied to a group of tubes with a large diameter (Figures 12-14), and an example of a singularizing process applied to a group of tubes with a small diameter (Figures 15-17).

In such photographs, the left pane of display 50 shows a control area comprising the containment cradle 13 and the conveying plane 15 with the driving member 16. As can be seen in the figures, respective front ends of the elongated pieces P are shown from the front and outlined in respective small boxes. The processing system assigns a respective sequential label to each tracked end/tube depending on the position and probability of reaching the conveying plane 15. Therefore, the tube closest/with greatest probability is assigned label "0", and the other tubes in the containment cradle 13 are assigned a correspondingly increasing label: "1", "2" and so on. The right pane of display 50 shows a geometric reconstruction of the monitored elements: the front wall 13c of the containment cradle 13 with the upper edge 13c', the bottom surface of the containment cradle 13 /lifter 14, the tube profiles, the conveying plane 15, and the driving member 16. The inclination of the oscillating structure 12 is not perceivable in the photographs since, as mentioned above, camera 20 in the embodiment indicated is integral with the oscillating structure 12, and therefore the image reference system is integral with the latter.

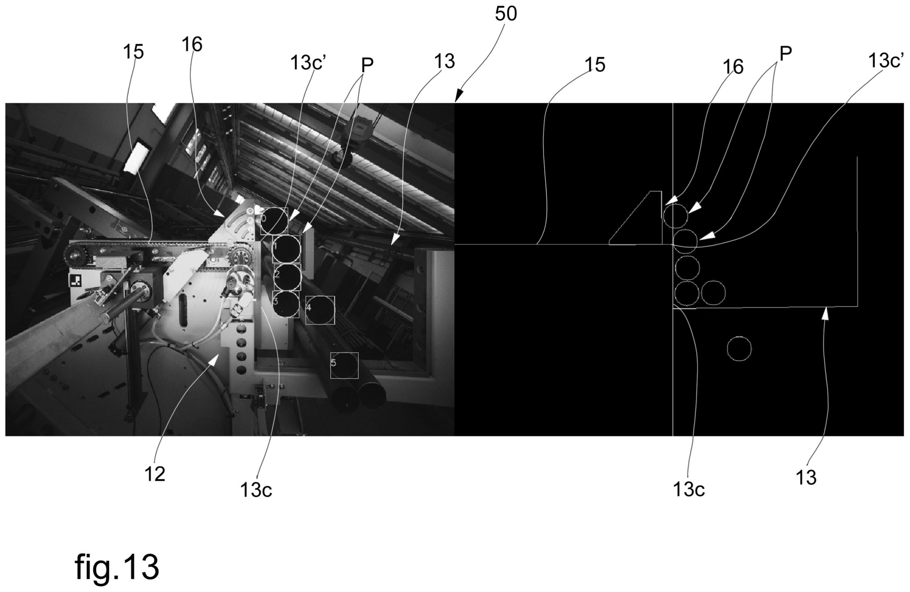

Figures 12 and 13 show that the containment cradle 13 is lifted so as to bring a part of the tubes stacked therein above the level of the conveying plane 15. The labeling of the parts may change in a corresponding manner from one image to another.

Figure 13 shows that bringing the first layer of tubes completely above the level of the conveying plane 15 disrupts the balance of the stack. Due to the inclination of the oscillating structure 12 therefore, a piece tends to fall onto the part of the conveying plane 15 delimited by the driving member 16, which is positioned at a distance from the upper edge 13c' of the containment cradle 13 that is less than the diameter of a single tube.

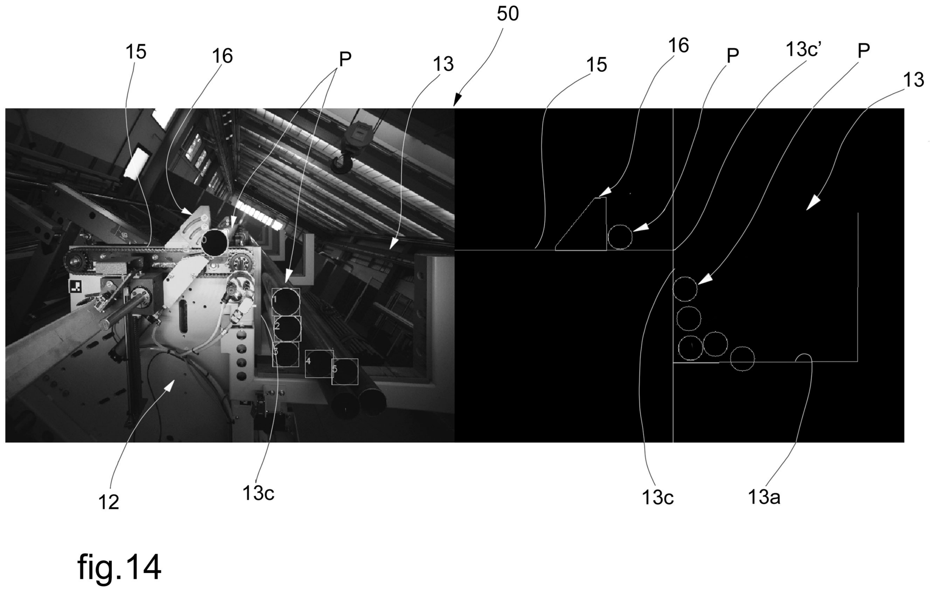

Figure 14 shows that by retracting the driving member 16, the single piece falls onto the conveying plane 15 and rolls/slides along it, accompanied by the driving member 16 in such a movement. Simultaneously, by lowering the containment cradle 13, the other pieces are moved away from the conveying plane 15.

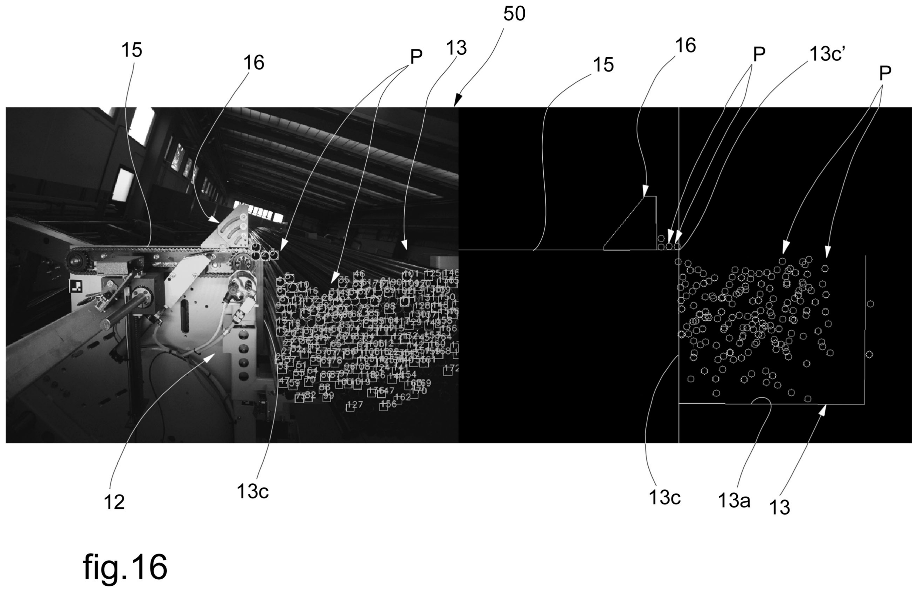

In the other example, Figures 15 and 16 show that the containment cradle 13 is lifted so as to bring a part of the tubes stacked therein above the level of the conveying plane 15, up to disrupting the balance of the stack. Due to the inclination of the oscillating structure 12, some of the pieces fall onto the part of the conveying plane 15 delimited by the driving tooth 16, which is positioned at a distance from the upper edge 13c' of the containment cradle 13 equal to several times the diameter of the single tube. This causes the tubes, which are compact and relatively flexible and therefore, may have a certain tendency to become entangled, to be arranged in series, parallel to one another, abutting against the driving member 16. By lowering the containment cradle 13, the other pieces are moved away from the conveying plane 15.

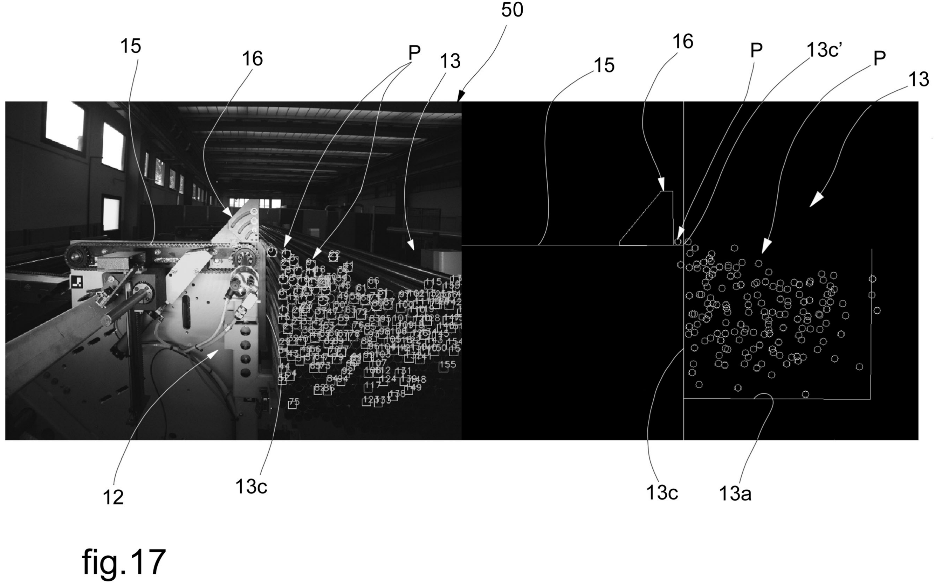

Figure 17 shows that by moving the driving member 16 towards the upper edge 13c' of the containment cradle 13, all the pieces on the conveying plane 15 except one are pushed back into the containment cradle 13.

If it is not possible to sort the pieces on the conveying plane 15 because they are excessively entangled in the containment cradle 13, the control system may decide to return all the pieces to the containment cradle 13 and actuate the motor of the oscillating structure 12 so that it oscillates alternately forward and backward to cause the tubes to be remixed.

Once the remixing has been performed, a subsequent attempt at singularizing may be performed.

The loading and singularizing system 10 may comprise additional image acquisition means in different positions to increase the number of pieces of information acquired and evaluate the best loading and singularizing efficiency improvement strategy. In the embodiment shown, for example, second image acquisition means 60 are provided (shown only in Figure 1), adapted to acquire a sequence of side images (varying over time, for example, video) of the elongated pieces P. Respective side surfaces of the elongated pieces P are shown in the sequence of side images acquired by the second image acquisition means 60.

In the example described, only some of the possible loading and singularizing optimization strategies are illustrated: it is however apparent that a system based on image processing by means of artificial intelligence, applied to the oscillating structure described, allows alternative optimization strategies to be identified as a function of the specific operating conditions, and the best to be selected, and therefore allows the creation of databases of such strategies that improve system training such as to be able to continuously make the process more efficient.

For example, such a system may allow the effective management of the randomness that a non-conforming elongated piece is loaded, and indeed suitably rejected into the containment cradle 13 recursively whenever it is at the top of the stack, so as to load exclusively conforming elongated pieces and leave non-conforming pieces in the containment cradle 13.

More generally, image processing by means of artificial intelligence may be applied to a loading and singularizing system, comprising
a movable or fixed containment cradle, configured to receive a plurality of elongated pieces,
a conveying plane, integral with the containment cradle or separate therefrom, and
movement means operable to transfer the elongated pieces from the containment cradle to the conveying plane.

In the embodiment described above, such movement means comprise the oscillating structure 12, lifter 14 and driving member 16.

## Claims

1. Loading and singularizing system for the controlled separation of elongated pieces, the system comprising
a containment cradle (13) configured to receive a plurality of elongated pieces (P),
a conveying plane (15),
movement means (12, 14, 16) operable to transfer the elongated pieces (P) from the containment cradle (13) to the conveying plane (15),
image acquisition means (20) aimed at the containment cradle (13) and the conveying plane (15), said image acquisition means (20) being adapted to acquire a sequence of images of the elongated pieces (P) in the containment cradle (13) and on the conveying plane (15), at least the respective front ends of the elongated pieces (P) being visible in the sequence of images,
artificial intelligence electronic processing means (30) arranged to receive said sequence of images as input and to assign each elongated piece with a respective position of the elongated piece with respect to a given reference system, and
control means (40) coupled with the electronic processing means (30) and arranged to control said movement means (12, 14, 16) depending on the positioning of said elongated pieces in said sequence of images,
the loading and singularizing system being **characterized in that** said electronic processing means (30) are capable of tracking and monitoring the movement of the elongated pieces (P) along the entire conveying plane (15).

2. Loading and singularizing system according to claim 1, wherein said artificial intelligence electronic processing means (30) are further arranged to assign each elongated piece with a respective value of probability of reaching the conveying plane (15), and wherein said control means (40) are further arranged to control said movement means (12, 14, 16) depending on the values of probability of reaching the conveying plane (15) assigned to said elongated pieces.

3. Loading and singularizing system according to claim 1 or 2, further comprising a support structure (11),
an oscillating structure (12) supported by the support structure (11) and capable of rotating with respect thereto, said oscillating structure carrying the containment cradle (13), a lifter (14) carried by the oscillating structure (12), the lifter (14) being configured to lift the elongated pieces (P) contained in the containment cradle (13),
wherein the conveying plane (15) is carried by the oscillating structure (12) and has an end (15a) adjacent to an upper edge (13c') of the containment cradle (13), the conveying plane (15) comprising at least one driving member (16) arranged in a movable manner along the conveying plane (15) in a conveying direction, so that the elongated pieces (P) that are lifted by the lifter (14) beyond the upper edge (13c') of the containment cradle (13) and reach the conveying plane (15) can be conveyed in a controlled manner along the conveying plane (15),
wherein the oscillating structure (12) is rotatable between a vertical position, in which the conveying plane (15) is arranged horizontally, and a forwardly inclined position in which the conveying plane (15) is inclined and arranged below the upper edge (13c') of the containment cradle (13),
wherein the control means (40) are arranged to control the movement of at least one of said oscillating structure (12), lifter (14) and driving member (16) depending on the positioning of said elongated pieces in said sequence of images.

4. Loading and singularizing system according to claim 3, wherein said processing means (30) and control means (40) are capable of cooperating to adjust the position of the driving member (16) with respect to the upper edge (13c') of the containment cradle (13) depending on how many elongated pieces (P) in the containment cradle (13) are to be received on the conveying plane (15).

5. Loading and singularizing system according to claim 3 or 4, wherein said processing means (30) and control means (40) are capable of cooperating to move the driving member (16) towards the upper edge (13c') of the containment cradle (13) to push elongated pieces (P) present on the conveying plane (15) back into the containment cradle (13).

6. Loading and singularizing system according to claim 5, wherein said processing means (30) and control means (40) are capable of cooperating to stop the driving member (16) during movement towards the upper edge (13c') of the containment cradle (13) to maintain only one of said elongated pieces (P) on the conveying plane (15).

7. Loading and singularizing system according to one of claims 3 to 6, wherein the oscillating structure (12) is further rotatable between the vertical position and a rearwardly inclined position, in which the conveying plane (15) is inclined and arranged above the upper edge (13c') of the containment cradle (13).

8. Loading and singularizing system according to claim 7, wherein said processing means (30) and control means (40) are capable of cooperating to oscillate the oscillating structure (12) between the forwardly inclined position and the rearwardly inclined position to remix the elongated pieces (P) contained in the containment cradle (13).

9. Loading and singularizing system according to one of claims 3 to 8, wherein said image acquisition means (20) are positioned at one end of the oscillating structure (12).

10. Loading and singularizing system according to one of claims 2 to 9, wherein said values of probability of reaching the conveying plane (15) assigned to said elongated pieces consist of sequential labels respectively assigned to the elongated pieces depending on their probability of reaching the conveying plane (15).

11. Loading and singularizing system according to one of the preceding claims, wherein said processing means (30) are capable of identifying a non-conforming elongated piece present on the conveying plane (15), said processing means (30) and control means (40) being capable of cooperating to return the non-conforming elongated piece to the containment cradle (13).

12. Loading and singularizing system according to one of the preceding claims, further comprising second image acquisition means (60) adapted to acquire a sequence of side images of the elongated pieces (P), respective side surfaces of the elongated pieces (P) being visible in the sequence of side images.
